Europäisches Patentamt

European Patent Office

Office européen des brevets

(11) Veröffentlichungsnummer : **0 176 828**
**B1**

(12) # EUROPÄISCHE PATENTSCHRIFT

(45) Veröffentlichungstag der Patentschrift :
26.04.89

(21) Anmeldenummer : 85111477.7

(22) Anmeldetag : 11.09.85

(51) Int. Cl.⁴ : **F 04 C 29/02**, F 01 M 1/10,
F 16 K 11/074, F 16 L 37/28

(54) **Ölgedichtete Vakuumpumpe.**

(30) Priorität : 02.10.84 DE 3436079

(43) Veröffentlichungstag der Anmeldung :
09.04.86 Patentblatt 86/15

(45) Bekanntmachung des Hinweises auf die Patenterteilung : 26.04.89 Patentblatt 89/17

(84) Benannte Vertragsstaaten :
CH DE FR GB LI

(56) Entgegenhaltungen :
FR—A— 2 479 397
GB—A— 576 681
GB—A— 2 018 956
US—A— 3 586 051
US—A— 3 669 148
US—A— 3 982 520
US—A— 4 130 133

(73) Patentinhaber : **LEYBOLD AKTIENGESELLSCHAFT**
**Bonner Strasse 498**
**D-5000 Köln 51 (DE)**

(72) Erfinder : **Berges, Hanns-Peter, Dr.**
**Neusser Strasse 25**
**D-5000 Köln 90 (DE)**
Erfinder : **Leier, Wolfgang**
**Siebenmorgen 8**
**D-5060 Bergisch Gladbach (DE)**

(74) Vertreter : **Leineweber, Jürgen, Dipl.-Phys.**
**Nagelschmiedshütte 8**
**D-5000 Köln 40 (DE)**

EP 0 176 828 B1

## Beschreibung

Die Erfindung bezieht sich auf eine ölgedichtete Vakuumpumpe mit einem über zwei Mündungen nach außen geführten Ölkreislauf, in den eine außerhalb der Vakuumpumpe angeordnete Filtereinrichtung über eine Kupplung einfügbar ist.

Die Ausrüstung einer mechanischen Vakuumpumpe, z. B. einer Drehschieber- oder Sperrschieber-Vakuumpumpe, mit einem Ölfilter ist dann zweckmäßig, wenn die Gefahr einer stärkeren Verschmutzung des Pumpenöls durch feste Teilchen (z. B. Staub) besteht. Wird die Pumpe in Chemie-Anlagen eingesetzt, dann ist der Einsatz chemischer Ölfilter von besonderer Bedeutung, um durch Säuredämpfe verursachte Korrosionen in der Pumpe zu vermeiden. Üblicherweise ist die Anordnung von Filtern im Ölkreislauf so getroffen, daß der Austausch der Filtereinsätze erst nach dem Abschalten der Vakuumpumpe vorgenommen werden kann.

Es besteht jedoch gerade im Anlagenbau der Wunsch, Vakuumpumpen im Dauerbetrieb einzusetzen. Dazu ist es bekannt, den Ölkreislauf über zwei Mündungen nach außen zu führen und diese jeweils mit dem einen Teil einer Schlauchkupplung auszurüsten. Die Herstellung der Verbindung zur Filtereinrichtung erfolgt über zwei Schläuche, die jeweils das Gegenstück der Schlauchkupplung aufweisen und den Ölkreislauf der Vakuumpumpe über die Filtereinrichtung schließen. Ein Filterwechsel erfolgt in der Weise, daß zunächst die Schlauchkupplungen gelöst werden. Dadurch erfolgt gleichzeitig ein Verschluß der Schläuche und der pumpenseitigen Mündungen des Ölkreislaufs. Der Austausch des Filters kann dann vorgenommen werden. Pumpenseitig ist es erforderlich, den Ölkreislauf wegen der weiterlaufenden Pumpe kurzzuschließen, um den Aufbau eines überhöhten Druckes infolge der weiterlaufenden Ölpumpe im Ölkreislauf zu vermeiden. Das geschieht bei der vorbekannten Lösung mit Hilfe eines Überdruckventils, das pumpenseitig im Bereich der Mündungen angeordnet ist.

Die vorbekannte Lösung hat zunächst den Nachteil der Verwendung von Schlauchkupplungen. Diese sind infolge ihres relativ komplizierten Aufbaus störanfällig. Die beiden Schlauchkupplungen stellen praktisch vier mit Schraubenfedern belastete Ventile dar, deren Bauteile während des Normalbetriebs direkt dem z. B. mit korrosiv wirkenden Verunreinigungen beladenen Ölstrom ausgesetzt sind. Dabei sind insbesondere die Federn stark gefährdet. Können diese während des Filterwechsels ihre Funktion (Erzeugung einer ausreichenden Schließkraft) nicht mehr erfüllen, dann tritt heißes, verschmutztes oder gar vergiftetes Öl oder ein anderes Dichtmittel aus.

Darüber hinaus ist auch die Funktion des bei der vorbekannten Lösung notwendigen Rückschlagventils um so gefährdeter, je stärker die Verunreinigungen sind. Falls sich dieses Ventil während eines Filterwechsels wegen allzu starker Verschmutzung nicht mehr öffnet, sind unzulässige Druckerhöhungen und damit Ölleitungsrisse unvermeidbar. Bleibt es nach einem Filterwechsel offen, ist eine ausreichende Reinigung des Öls nicht mehr gewährleistet.

Aus der US-A-36 69 148 ist ein 3-Wege-Ventil bekannt, das den Wechsel eines außerhalb einer Maschine befindlichen Filters durch Betätigung eines Handgriffes ermöglicht. Während des Wechsels sind die Zuführungsleitungen offen. Eine Trennfunktion hat die vorbekannte Einrichtung nicht. Die GB-A-576 681 offenbart eine Kupplung mit Ventilscheiben, welche jedoch einen einseitigen Bypass nicht aufweist und deshalb bei einer Vakuumpumpe, deren Ölkreislauf auch während des Filterwechsels geschlossen bleiben soll, nicht einsetzbar ist.

Der vorliegenden Erfindung liegt die Aufgabe zugrunde, eine Vakuumpumpe der eingangs genannten Art zu schaffen, deren Kupplung zwischen Pumpe und Filtereinrichtung wesentlich einfacher und funktionssicherer gestaltet ist.

Erfindungsgemäß wird diese Aufgabe dadurch gelöst, daß die Kupplung eine den beiden Mündungen des Ölkreislaufes zugeordnete, mittels einer Betätigungseinrichtung verdrehbare Scheibe umfaßt, die zwei Durchgangsbohrungen zur Herstellung der Verbindung des Ölkreislaufs mit der Filtereinrichtung sowie eine etwa senkrecht zur Verbindungslinie der Durchgangsbohrungen angeordnete Nut zur Trennung der Verbindung zur Filtereinrichtung und zur kurzschließenden Verbindung der pumpenseitigen Mündungen des Ölkreislaufs aufweist. Bei einer Lösung dieser Art sind Schraubenfedern nicht mehr erforderlich. Auch das Rückschlagventil für den Kurzschluß der Ölkreislaufs während des Filterwechsels kann entfallen. Insgesamt ist die Anzahl der beweglichen Bauteile im Vergleich zu den bisher verwendeten Schlauchkupplungen erheblich geringer, wodurch die Funktionssicherheit erheblich verbessert ist.

Zweckmäßigerweise sind die Endbereiche der Nut jeweils mit einer einseitigen Erweiterung ausgerüstet, deren Lage und Größe so gewählt sind, daß die Scheibe in einer Zwischenstellung sowohl den Ölkreislauf mit der Filtereinrichtung verbindet als auch die kurzschließende Verbindung über die Nut herstellt. Durch diese Formgebung der Nut ist sichergestellt, daß auch während des Umschaltens der Betätigungseinrichtung von Normalbetrieb auf Filterwechsel eine Druckerhöhung infolge eines kurzzeitigen Abschlusses der Mündungen des Ölkreislaufs vermieden ist.

Vorteilhaft ist weiter, die erfindungsgemäße Kupplung mit einer weiteren, filterseitig angeordneten Scheibe auszurüsten, die entsprechend der ersten, pumpenseitig angeordneten Scheibe gestaltet ist. Das Verdrehen der beiden Scheiben erfolgt gleichsinnig mit Hilfe der Betätigungseinrichtung, so daß mit der Lösung des Filters ein dichter Abschluß des Filterraumes bewirkt wird. Im Falle hochgiftiger Verunreinigungen des Dichtmittels ist diese Lösung von Bedeutung. In einem solchen Fall kann die Filtereinrichtung mit dicht abgeschlossenem Filterraum gefahrlos zu einem Abzug transportiert und erst dort gewartet werden.

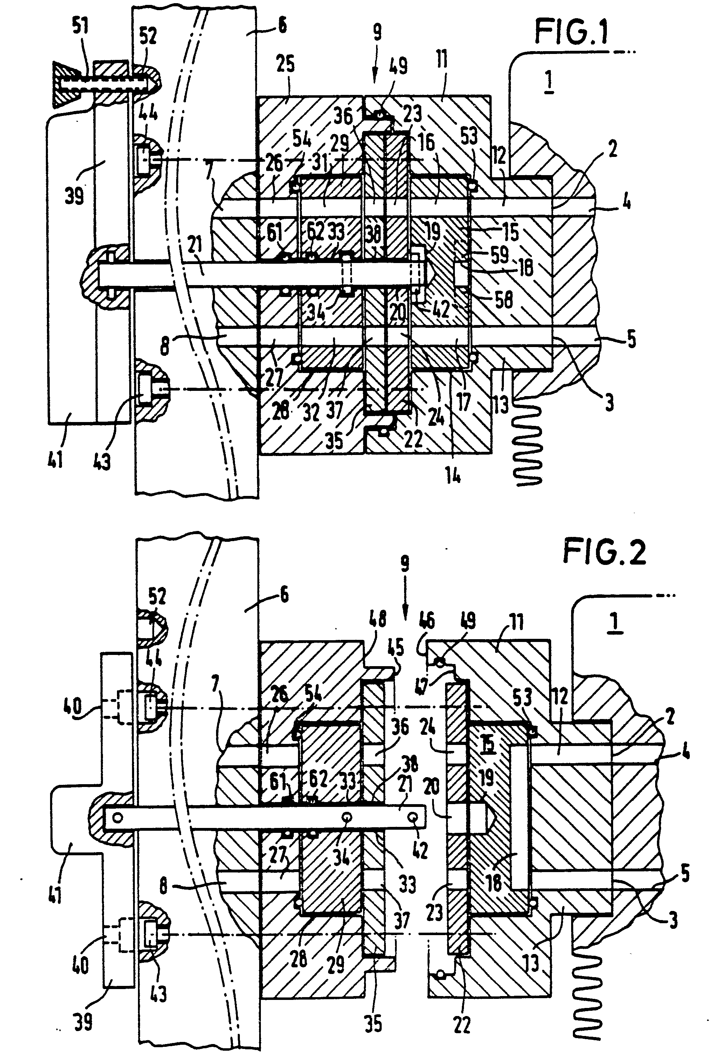

Weitere Vorteile und Einzelheiten der Erfindung sollen anhand eines in den Figuren 1 bis 5 dargestellten Ausführungsbeispieles erläutert werden.

Die Figuren 1 und 2 zeigen jeweils den Teil einer Vakuumpumpe 1, in dessen Außenbereich die Mündungen 2 und 3 von zwei Ölleitungen 4 und 5 eines im einzelnen nicht dargestellten Ölkreislaufs innerhalb der Vakuumpumpe 1 angeordnet sind. In diesen Ölkreislauf der Vakuumpumpe 1 soll während ihres Betriebs ein außerhalb der Vakuumpumpe 1 befindlicher Filter eingeschaltet sein, der sich im Filtergehäuse 6 befindet. Die Zu- bzw. Ableitung zum im einzelnen nicht dargestellten Filter selbst münden ebenfalls nach außen und sind mit 7 bzw. 8 bezeichnet. Die generell mit 9 bezeichnete Kupplung hat die Aufgabe, die Kanäle 4 und 7 bzw. 5 und 8 während des Normalbetriebs der Vakuumpumpe dicht zu verbinden (Fig. 1) und zusätzlich das Filtergehäuse 6 zu tragen. Im Falle eines Filterwechsels ist die Kupplung 9 zu lösen, so daß das Filtergehäuse 6 insgesamt abnehmbar ist (Fig. 2).

Die Kupplung 9 umfaßt ein pumpenseitiges mit der Pumpe 1 verbundenes Paßstück 11 mit Bohrungen 12 und 13, die eine Fortsetzung der Ölleitungen 4 und 5 bilden. In einer zylindrischen Ausnehmung 14 des Paßstückes 11 befindet sich eine drehbar angeordnete Ventilscheibe 15, die zwei den Bohrungen 12 und 13 im Paßstück 11 zugeordnete Durchtrittsöffnungen 16 und 17 aufweist. Die pumpenseitigen Stirnseite der Ventilscheibe 15 ist zusätzlich mit einer Vertiefung oder Nut 18 versehen, die etwa senkrecht zur Verbindungslinie der Bohrungen 16 und 17 angeordnet ist und deren Länge etwa dem Abstand dieser Bohrungen entspricht. Auf ihrer filterseitigen Stirnseite ist die Scheibe 15 mit einer schlüssellochähnlichen Vertiefung 19 versehen, in die die Welle 21 einer Betätigungseinrichtung einsteckbar ist.

Mittels einer mit dem Paßstück 11 verbundenen festen Haltescheibe 22 ist die drehbare Ventilscheibe 15 in ihrer zylindrischen Ausnehmung 14 fixiert. Die feste Scheibe 22 weist mit den Bohrungen 12 und 13 im Paßstück 11 korrespondierende Durchtrittsöffnungen 23 und 24 sowie eine zentrale, ebenfalls schlüssellochförmig gestaltete Durchbrechung 20 auf.

Der filterseitige Teil der Kupplung 9 ist ähnlich aufgebaut. Ein Paßstück 25 mit zu den Leitungen 7 und 8 korrespondierenden Bohrungen 26 und 27 ist fest mit dem Filtergehäuse 6 verbunden. In der zylindrischen Ausnehmung 28 befindet sich eine drehbare Ventilscheibe 29 mit zu den Bohrungen 26 und 27 im Paßstück 25 korrespondierenden Durchtrittsöffnungen 31 und 32. Außerdem weist die Ventilscheibe 29 eine zentrale Bohrung 33 für die Welle 21 der Betätigungseinrichtung auf. Mittels des Stiftes 34 sind Welle 21 und Scheibe 29 fest miteinander verbunden. Die drehbare Ventilscheibe 29 ist ebenfalls mittels einer Haltescheibe 35 in ihrer Ausnehmung 28 fixiert. Die Haltescheibe 35 weist die Bohrungen 36 und 37 auf, die gleichachsig mit den Bohrungen 26 und 27 des Paßstückes 25 liegen. Durch die zentrale Bohrung 38 greift die Welle 21 hindurch.

Die Betätigungseinrichtung umfaßt den mit einer Scheibe 39 verbundenen Betätigungshebel 41, die damit fest verbundene Welle 21, die mittels des Stiftes 34 fest mit der filterseitigen Ventilscheibe 29 verbunden ist. Im Bereich ihres freien Endes ist die Welle 21 mit dem weiteren Stift 42 ausgerüstet, der mit der schlüssellochförmigen Öffnung 20 in der pumpenseitigen Haltescheibe 22 sowie mit der schlüssellochförmigen Vertiefung 19 in der Ventilscheibe 15 des pumpenseitigen Paßstückes 11 korrespondiert. Zusätzlich ist der Betätigungshebel 41 zum Zwecke der Verhinderung einer unbeabsichtigten Betätigung mit einer Sicherung ausgerüstet. Diese besteht aus einer am Hebel gehaltenen Rändelschraube 51 (Fig. 1), der im Filtergehäuse 6 zwei Gewindebohrungen zugeordnet sind. Die Lage der Gewindebohrungen ist so gewählt, daß die Rändelschraube 51 darin einschraubbar ist, wenn der Betätigungshebel 41 entweder die Stellung « Normalbetrieb » oder die Stellung « Filterwechsel » einnimmt. Von den Gewindebohrungen ist nur eine sichtbar und mit 52 bezeichnet. Einfache Bohrungen reichen zur Positionssicherung des Hebels 41 aus, wenn an Stelle der Rändelschraube 51 ein federbelasteter Stift vorgesehen ist, der in die Bohrungen einrastbar ist.

Beim dargestellten Ausführungsbeispiel durchsetzt die Welle 21 das Filtergehäuse 6, so daß sich der Betätigungshebel 41 auf der der Kupplung 9 abgewandten Seite des Filtergehäuses 6 befindet. Zur Halterung und Befestigung des Filtergehäuses 6 an der Vakuumpumpe 1 dienen Maschinenschrauben 43 und 44, die ebenfalls das Filtergehäuse 6 sowie das filterseitige Paßstück 25 durchsetzen und in das pumpenseitige Paßstück 11 einschraubbar sind. Die Anordnung der Köpfe der Schrauben 43 und 44 ist so getroffen, daß sie sich in derjenigen Stellung des Betätigungshebels, bei der das Filtergehäuse 6 an den Ölkreislauf der Vakuumpumpe 1 angeschlossen ist (Normalbetrieb, Fig. 1), unterhalb des Betätigungshebels 41 bzw. der Scheibe 39 befinden und damit nicht unbeabsichtigt gelöst werden können. Erst in der Stellung « Filterwechsel » (Fig. 2) werden die Schrauben 43, 44 durch Bohrungen 40 in der Scheibe 39 zugänglich. Diese Bohrungen 40 weisen jeweils zwei Abschnitte mit unterschiedlichem Durchmesser auf. Der dem Schraubenkopf jeweils zugewandte Abschnitt hat einen etwas größeren, der weitere einen etwas kleineren Durchmesser als der Schraubenkopf selbst. Dadurch sind die Schrauben 43, 44 in der Stellung « Filterwechsel » gegen ein Herausfallen gesichert.

Die Paßstücke 11 und 25 sind in ihren peripheren Bereichen mit zueinander passenden Zentriervorsprüngen 45 bzw. 46 bzw. Aussparungen 47 bzw. 48 ausgerüstet. In diesem Bereich befindet sich ein Radialdichtring 49, der normalerweise keine Abdichtungsfunktion hat. Nur beim Versagen eines Dichtelementes in der Kupplung gewährleistet dieser Ring die Dichtheit nach außen.

Fig. 1 zeigt die Einrichtung bei an die Vakuumpumpe 1 angeschlossenem Filtergehäuse 6. Die Ölleitungen 4 und 7 bzw. 5 und 8 sind über die verschiedenen Bohrungen in den Bauteilen der Kupplung 9 miteinander verbunden. Eine ausreichende Dichtheit des Systems ist gewährleistet, wenn die axialen Stirnflächen der scheibenförmigen Bauteile ausreichend plan gestaltet sind. Gesonderte Schraubenfedern sind nicht erforderlich. Der anstehende Öldruck preßt die Ventilscheiben 15, 29 jeweils gegen die Haltescheiben 22, 35 und gewährleistet so die Dichtheit. Nach dem Lösen der Rändelschraube 51 und Verdrehen des Betätigungshebels 41 um 90° wird eine Stellung der Bauteile erzielt, die in Fig. 2 dargestellt ist. Die Kanäle 4 und 5 sind über die Nut 18 miteinander verbunden, so daß der Ölkreislauf 1 der Vakuumpumpe kurzgeschlossen ist. Die Kanäle 7 und 8 sind durch die Scheibe 29 verschlossen, so daß ein unerwünschtes Austreten von verschmutzten Dichtmitteln auch aus dem Filtergehäuse 6 vermieden ist. In der in Fig. 2 dargestellten Stellung des Hebels 41 sind die Schrauben 43 und 44 durch die Bohrungen 40 in der Scheibe 39 zugänglich. Nach dem Lösen dieser Schrauben kann das Filtergehäuse 6 von der Vakuumpumpe 1 entfernt werden.

Beim dargestellten Ausführungsbeispiel sind jeweils im äußeren Bereich zwischen den Ventilscheiben 15 und 29 sowie ihren zugehörigen Paßstücken 11 und 25 O-Ringe 53 und 54 vorgesehen. Diese bestehen z. B. aus Viton, das von aggressiven Verunreinigungen nicht angegriffen wird. Wenn die Ventilscheiben 15, 29 — wie oben erläutert — gegen ihre Haltescheiben 22, 35 gedrückt werden, kann auf der Druckseite ein Spalt entstehen. Die O-Ringe 53 und 54 dienen der Abdichtung dieses Spaltes, so daß kein Lecköl hinter den Scheiben 15, 29 nach außen dringen kann. Zur Abdichtung der Welle 21 gegen solches Lecköl dienen die O-Ringe 61, 62.

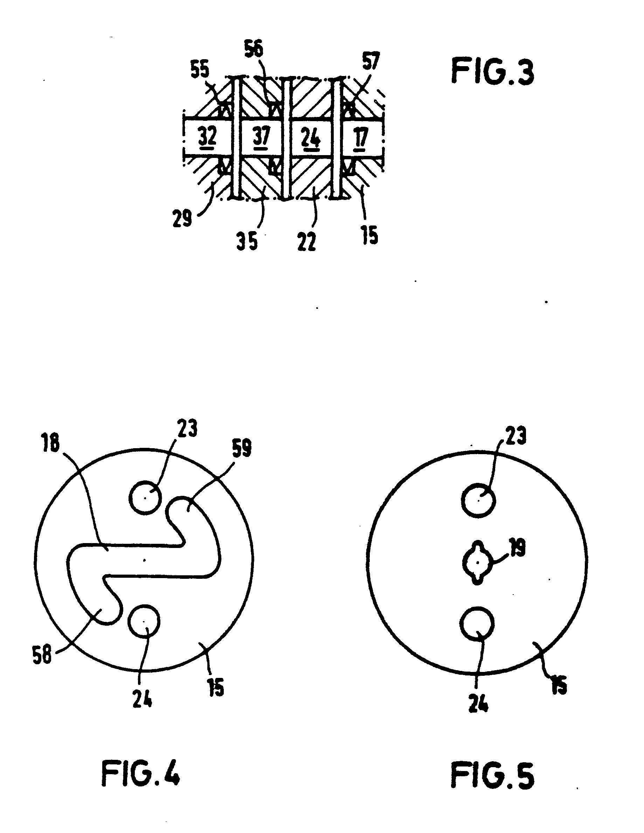

Zusätzlich können als weitere Maßnahme zur Erhöhung der Dichtsicherheit im Bereich der Durchtrittsöffnungen 36, 37 bzw. 23, 24 in den festen Scheiben 35 bzw. 22 zusätzliche, vorzugsweise aus Teflon bestehende Dichtringe 55, 56 und 57 vorgesehen sein. In Fig. 3 sind diese dargestellt. Derartige Dichtringe können einen Federkern aufweisen, der die Aufgabe hat, das Fließen des Teflons zu verhindern.

Die Figuren 4 bzw. 5 zeigen eine Draufsicht auf die Stirnseiten der Scheibe 15 mit den Durchtrittsöffnungen 23, 24. Aus Fig. 4 ist ersichtlich, daß die Nut 18 im wesentlichen senkrecht zur Verbindungslinie der beiden Durchtrittsöffnungen 23 und 24 angeordnet ist. In ihren Endbereichen ist die Nut 18 jeweils mit einer einseitigen Erweiterung 58, 59 versehen. Die Lage und Größe dieser Erweiterungen ist so gewählt, daß in jeder Stellung des Betätigungshebels 41 nur eine der drei folgenden Verbindungszustände möglich ist :

a) Verbindung der Leitungen 4 bzw. 5 in der Vakuumpumpe 1 mit den Leitungen 7 bzw. 8 in dem Filtergehäuse 6 ;

b) Kurzschluß der Leitungen 3 und 4 über die Nut 18 ;

c) Zustände a) und b) gleichzeitig (Zwischenstellung).

Eine Zwischenstellung der Scheibe 15, bei der weder eine Verbindung der Leitungen 4 bzw. 5 mit den Leitungen 7 bzw. 8 noch ein Kurzschluß der Leitungen 4 und 5 hergestellt ist, existiert nicht. Dadurch ist die Gefahr des Entstehens eines unzulässig hohen Überdruckes im Ölkreislauf der Vakuumpumpe 1 sicher verhindert.

## Patentansprüche

1. Ölgedichtete Vakuumpumpe mit einem über zwei Mündungen nach außen geführten Ölkreislauf, in den eine außerhalb der Vakuumpumpe angeordnete Filtereinrichtung über eine Kupplung einfügbar ist, dadurch gekennzeichnet, daß die Kupplung (9) eine den beiden Mündungen (2, 3) des Ölkreislaufs (4, 5) zugeordnete, mittels einer Betätigungseinrichtung (21, 41) verdrehbare Ventilscheibe (15) umfaßt, die zwei senkrecht zur Ebene der Scheibe (15) verlaufende Durchgangsbohrungen (16, 17) zur Herstellung der Verbindung des Ölkreislaufs mit der Filtereinrichtung (6) sowie eine etwa senkrecht zur Verbindungslinie der Durchgangsbohrungen angeordnete Nut (18) zur Trennung der Verbindung zur Filtereinrichtung und zur kurzschließenden Verbindung der pumpseitigen Mündungen des Ölkreislaufes aufweist.

2. Vakuumpumpe nach Anspruch 1, dadurch gekennzeichnet, daß die Endbereiche der Nut (18) jeweils mit einer einseitigen Erweiterung (58, 59) ausgerüstet sind, deren Lage und Größe so gewählt ist, daß die Ventilscheibe (15) in einer Zwischenstellung sowohl den Ölkreislauf (4, 5) mit der Filtereinrichtung (6) verbindet als auch die kurzschließende Verbindung über die Nut (18) herstellt.

3. Vakuumpumpe nach Anspruch 1 oder 2, dadurch gekennzeichnet, daß die Kupplung (9) eine weitere, filterseitig angeordnete Ventilscheibe (29) mit zwei Durchgangsbohrungen (26, 27) zum Öffnen und Verschließen der filterseitigen Mündungen des Ölkreislaufs (7, 8) im Filter (6) aufweist.

4. Vakuumpumpe nach Anspruch 1, 2 oder 3, dadurch gekennzeichnet, daß die Kupplung (9) gleichzeitig Träger der Filtereinrichtung (6) ist.

5. Vakuumpumpe nach einem der Ansprüche 1 bis 4, dadurch gekennzeichnet, daß die Betätigungseinrichtung eine Welle (21) umfaßt, deren freies Ende mit der pumpenseitigen Ventilscheibe (15) kuppelbar ist.

6. Vakuumpumpe nach Anspruch 4 und 5, dadurch gekennzeichnet, daß die Welle (21) die Filtereinrichtung (6) durchsetzt und auf der dem filterseitigen Kupplungsteil (9) abgekehrten Seite mit einem Betätigungshebel (41) ausgerüstet ist.

7. Vakuumpumpe nach Anspruch 6, dadurch gekennzeichnet, daß der Betätigungshebel (41) in den beiden Positionen « Normalbetrieb » und « Filterwechsel » gegen unbeabsichtigte Verstellung gesichert ist.

8. Vakuumpumpe nach Anspruch 6 oder 7, dadurch gekennzeichnet, daß die Filtereinrichtung (6) mittels Schrauben (43, 44) lösbar gehaltert ist und daß die Schraubenköpfe so angeordnet sind, daß sie vom Betätigungshebel (41) bzw. einer damit verbundenen Scheibe (39) in der Stellung « Normalbetrieb » verdeckt und in der Stellung « Filterwechsel » zugänglich sind.

9. Vakuumpumpe nach einem der vorhergehenden Ansprüche, dadurch gekennzeichnet, daß die drehbaren Ventilscheiben (15, 29) jeweils mittels einer Haltescheibe (22, 35) in einer zylindrischen Ausnehmung (14, 28) eines Paßstückes (11, 25) fixiert sind.

10. Vakuumpumpe nach Anspruch 9, dadurch gekennzeichnet, daß zwischen den Scheiben (15, 29) und den Paßstücken (11, 25) Axialdichtringe (53, 54) angeordnet sind.

11. Vakuumpumpe nach einem der vorhergehenden Ansprüche, dadurch gekennzeichnet, daß einer oder mehreren Durchtrittsöffnungen in den Scheiben (15, 22, 29, 35) Dichtringe (55, 56, 57) zugeordnet sind.

## Claims

1. An oil-sealed vacuum pump having an oil circuit which is directed outwardly by way of two ports and into which a filter device disposed outside the vacuum pump may be fitted by way of a coupling, characterised in that the coupling (9) comprises a valve disc (15) which is associated with the two ports (2, 3) of the oil circuit (4, 5) and which is rotatable by means of an actuating device (21, 41), which valve disc has two through bores (16, 17) extending at right angles to the plane of the disc (15) for the purpose of establishing communication between the oil circuit and the filter device (6), and a groove (18) disposed approximately at right angles to the connecting line of the through bores for the purpose of shutting off the connection to the filter device and for the short-circuiting connection of the oil circuit ports on the pump side.

2. A vacuum pump as claimed in claim 1, characterised in that one side of each end region of the groove (18) is provided with a widened portion (58, 59) whose position and size are chosen in such a way that the valve disc (15), when in an intermediate position, connects the oil circuit (4, 5) to the filter device (6) and also establishes the short-circuiting connection by way of the groove (18).

3. A vacuum pump as claimed in claim 1 or 2, characterised in that the coupling (9) has a further valve disc (29) which is disposed on the filter side and which has two through bores (26, 27) for opening and closing the filter-side ports of the oil circuit (7, 8) in the filter (6).

4. A vacuum pump as claimed in claim 1, 2 or 3, characterised in that the coupling (9) is at the same time the support for the filter device (6).

5. A vacuum pump as claimed in any one of claims 1 to 4, characterised in that the actuating device comprises a shaft (21) whose free end is couplable the valve disc (15) on the pump side.

6. A vacuum pump as claimed in claims 4 and 5, characterised in that the shaft (21) passes through the filter device (6) and is equipped with an actuating lever (41) at the end which is remote from the coupling part (9) on the filter side.

7. A vacuum pump as claimed in claim 6, characterised in that the actuating lever (41) is secured again unintentional displacement when in the two positions « normal operation » and « filter change ».

8. A vacuum pump as claimed in claim 6 or 7, characterised in that the filter device (6) is releaseably held by means of screws (43, 44), and that the heads of the screws are disposed in such a way that they are covered by the actuating lever (41) or by a disc (39) connected thereto when in the « normal operation » position, and are accessible when in the « filter change » position.

9. A vacuum pump as claimed in any one of the preceding claims, characterised in that each of the rotatable valve discs (15, 29) is fixed in a cylindrical recess (14, 28) of a fitting piece (11, 25) by means of a retaining disc (22, 35).

10. A vacuum pump as claimed in claim 9, characterised in that axial sealing rings (53, 54) are disposed between the discs (15, 29) and the fitting pieces (11, 25).

11. A vacuum pump as claimed in any one of the preceding claims, characterised in that sealing rings (55, 56, 57) are associated with one or more openings in the discs (15, 22, 29, 35).

## Revendications

1. Pompe à vide à joint hydraulique, comprenant un circuit d'huile qui se prolonge à l'extérieur en passant par deux orifices et dans lequel un dispositif de filtration disposé à l'extérieur de la pompe à vide peut être intercalé par l'intermédiaire d'un raccord, caractérisé en ce que le raccord (9) comprend un disque de distribution (15) associé aux deux orifices (2, 3) du circuit d'huile (4, 5) et qu'on peut faire tourner au moyen d'un dispositif d'actionnement (21, 41), disque qui présente deux perçages traversants (16, 17) s'étendant perpendiculairement au plan du disque (15), destinés à établir la communication entre le circuit d'huile et le dispositif de filtration (6), ainsi qu'une rainure (18) disposée à peu près perpendiculairement à la ligne qui joint les perçages traversants, et qui sert à supprimer la communication avec le dispositif de filtration et à établir une liaison de court-circuit entre les orifices du circuit d'huile portés par la pompe.

2. Pompe à vide selon la revendication 1, caractérisée en ce qu'une des régions d'extrémités de la rainure (18) est munie d'un élargissement unilatéral (58, 59) dont la position et la dimension sont choisies de telle manière que, dans une position intermédiaire, le disque de distribution (15) relie le circuit d'huile (4, 5) au dispositif de filtration (6) et établisse en même temps une liaison de court-circuit par l'intermédiaire de la rainure (18).

3. Pompe à vide selon la revendication 1 ou 2, caractérisée en ce que le raccord (9) comprend un autre disque de distribution (29), disposé côté filtre, et muni de deux perçages traversants (26, 27) servant à ouvrir et à obturer les orifices du circuit d'huile (7, 8) du filtre (6) qui sont solidaires du filtre.

4. Pompe à vide selon la revendication 1, 2 ou 3, caractérisée en ce que le raccord (9) forme en même temps le support du dispositif de filtration (6).

5. Pompe à vide selon une des revendications 1 à 4, caractérisé en ce que le dispositif d'actionnement comprend un arbre (21) dont l'extrémité libre peut être accouplée au disque de distribution (15) côté pompe.

6. Pompe à vide selon les revendications 4 et 5, caractérisée en ce que l'arbre (21) traverse le dispositif de filtration (6) et est équipé d'un levier d'actionnement (41) sur le côté le plus éloigné de la partie côté filtre (9) du raccord.

7. Pompe à vide selon la revendication 6, caractérisée en ce que le levier d'actionnement (41) est bloqué contre tout déplacement involontaire dans les deux positions « fonctionnement normal » et « changement de filtre ».

8. Pompe à vide selon la revendication 6 ou 7, caractérisée en ce que le dispositif de filtration (6) est fixé de façon démontable au moyen de vis (43, 44) et en ce que les têtes des vis sont disposées de manière à être recouvertes par le levier d'actionnement (41) ou par un disque (39) relié à ce levier dans la position « fonctionnement normal » tandis qu'elles sont accessibles dans la position « changement de filtre ».

9. Pompe à vide selon une des revendications précédentes, caractérisée en ce que chacun des disques de distribution tournants (15, 29) est fixé dans un évidement cylindrique (14, 28) d'un adaptateur (11, 25) au moyen d'un disque de retenue (22, 35).

10. Pompe à vide selon la revendication 9, caractérisée en ce que des bagues d'étanchéité axiales (53, 54) sont disposées entre les disques (15, 29) et les adaptateurs (11, 25).

11. Pompe à vide selon une des revendications précédentes, caractérisée en ce que des bagues d'étanchéité (55, 56, 57) sont associées à une ou plusieurs ouverture(s) traversante(s) des disques (15, 22, 29, 35).

FIG.1

FIG.2

FIG.3

55 56 57

32 37 24 17

29 35 22 15

18 23 59

58 24 15

FIG.4

23

19

24 15

FIG.5